# EUROPÄISCHE PATENTSCHRIFT

(11) **EP 1 054 242 B1**
(45) Veröffentlichungstag und Bekanntmachung des Hinweises auf die Patenterteilung: **04.10.2006**
(21) Anmeldenummer: 00110156.7
(22) Anmeldetag: 12.05.2000
(51) Int. Cl.: G01G 21/24, G01G 7/02, G01G 23/01

(54) **Wägeaufnehmer**
Weighing sensor
Détecteur de poids

(30) Priorität: 20.05.1999 DE 19923208
(43) Veröffentlichungstag der Anmeldung: 22.11.2000
(73) Patentinhaber: SARTORIUS AG, 37075 Göttingen (DE)
(72) Erfinder: Müller, Michael, 37079 Göttingen (DE); Bajohr, Ulrich, 37113 Duderstadt (DE); Schulze, Werner, 37083 Göttingen (DE); Müller, Rudolf, 37120 Bovenden (DE); Erben, Detlef, 37077 Göttingen (DE); Engelhardt, Herbert, 37186 Moringen (DE)

(56) Entgegenhaltungen:
- EP-A- 0 093 183
- EP-A- 0 188 997
- EP-A- 0 518 202
- EP-A- 0 955 530
- DE-C- 19 540 782
- DE-U- 20 007 781
- DE-U- 29 614 601
- PATENT ABSTRACTS OF JAPAN vol. 009, no. 009 (P-327), 16. Januar 1985 (1985-01-16) & JP 59 159025 A (SHIMAZU SEISAKUSHO KK), 8. September 1984 (1984-09-08)

## Beschreibung

Die Erfindung bezieht sich auf einen Wägeaufnehmer nach dem Oberbegriff des Anspruches 1. Der Wägeaufnehmer nach dem Prinzip der elektromagnetischen Kraftkompensation, dessen wesentliche Teile aus einem einzigen Materialblock herausgearbeitet sind, hat einen vertikal beweglichen Lastaufnehmer, der durch an einem feststehenden Grundkörper des Materialblocks angelenkte Parallelführungselemente geführt ist. Der Lastaufnehmer ist mit mehreren zwischen diesem, einem Spulenträger und dem Grundkörper wirkungsmäßig in Reihe angeordneten Kraftübertragungselementen gekoppelt.

Wägeaufnehmer dieser Art sind z. B. aus der EP 518 202 A1 bekannt. Nachteilig an dieser bekannten Bauart ist, dass für den Permanentmagneten kein Platz innerhalb des einstückigen Blocks bleibt. In der EP 518 202 A1 ist deshalb vorgesehen, dass der Permanentmagnet außerhalb des einstückigen Blocks angebracht ist und dass der letzte Übersetzungshebel von mehreren Übersetzungshebeln durch seitliche Verlängerungsstücke, die die Spule tragen, verlängert ist. Dadurch sind aber die funktionellen und preislichen Vorteile des einstückigen Aufbaus teilweise verloren. Außerdem erfordert die Anordnung aller drei Übersetzungshebel übereinander eine große Bauhöhe. Alle Parallelführungselemente und Kraftübertragungselemente sind entsprechend der Blockbreite dimensioniert und über- und hintereinander angeordnet, wodurch die Bauform relativ hoch und schmal ist.

Ein ähnlicher Wägeaufnehmer mit zwei Übersetzungshebeln ist aus der DE 195 40 782 A1 bekannt. Es ist jedoch problematisch, mit zwei Übersetzungshebeln ein so großes Kraftübersetzungsverhältnis zu realisieren, wie es besonders für Hochlastwaagen mit 30...150 kg Höchstlast notwendig ist. Für den Einbau eines dritten Übersetzungshebels ist in der Bauart gemäß der DE 195 40 782 A1 jedoch kein Platz vorhanden, insbesondere ist die gehäusefeste Lagerung eines dritten Übersetzungshebels problematisch.

Aufgabe der Erfindung ist es daher, eine kompakte Bauform für einen Wägeaufnehmer der eingangs genannten Art weiterzubilden, bei der alle wesentlichen Kraftübertragungselemente komplett aus dem Materialblock herausgearbeitet werden können, ohne dass dadurch die Ausgangshöhe des Materialblockes und die Bauhöhe des fertigen Wägesystems groß gewählt werden muss.

Erfindungsgemäß wird dies durch die kennzeichnenden Merkmale des Anspruches 1 erreicht. Durch die symmetrische und kraftmäßige Aufteilung bzw. Aufgabelung einzelner Kraftübertragungselemente ist es möglich, den vorkragenden Teil des Grundkörpers relativ weit in Richtung des Lastaufnehmers vorkragen zu lassen und seine vertikalen Stufungen und horizontalen Stufungen bzw. horizontalen Einbuchtungen als Wider- bzw. Aufnahmelager für mehrere Kraftübertragungselemente zu nutzen. Durch diese erfindungsgemäße räumliche Aufteilung und dreidimensionale Aufgliederung der Übertragungselemente wird eine Geometrie geschaffen, die eine kompakte und niedrige monolithische Bauweise sowie insbesondere die Herstellung in Frästechnik ermöglicht.

Im einzelnen wird dies dadurch erreicht, dass mindestens ein Übersetzungshebel zumindest teilweise in zwei Teilhebel aufgeteilt ist, dass mindestens ein Koppelelement in zwei Teilkoppelelemente aufgeteilt ist und dass die Teilhebel und die Teilkoppelelemente symmetrisch auf beiden Seiten des vorkragenden Teils des gehäusefesten Bereiches angeordnet sind und dass alle Übersetzungshebel, alle Teilhebel, alle Koppelelemente und alle Teilkoppelelemente monolithischer Bestandteil des Blocks sind.

Durch die Aufteilung in Teilhebel und Teilkoppelelemente können diese auf beiden Seiten symmetrisch neben dem mittig angeordneten vorkragenden Teil des gehäusefesten Bereiches angeordnet sein und können so aus dem Block herausgearbeitet werden. Trotzdem bleibt ein hinreichend stabiler vorkragender Teil des gehäusefesten Bereiches erhalten. Durch die symmetrische Anordnung der Teilhebel und Teilkoppelelemente bleibt die Symmetrie des Kraftflusses erhalten, sodass die Ecklastempfindlichkeit gering bleibt. Diese erfindungsgemäße räumliche Aufteilung ermöglicht auch, dass auch eines der Kraftübertragungselemente unmittelbar als Auflager für ein Kalibriergewicht dienen kann, wobei das Kalibriergewicht entweder innerhalb oder außerhalb der Kontur des monolithischen Materialblocks angeordnet sein kann.

Bevorzugte Ausführungsformen der Erfindung sind Gegenstand der abhängigen Ansprüche.

Die Erfindung wird im folgenden anhand der Figuren beschrieben. Dabei zeigt:
Figur 1 schematisch die Anordnung der Hebel und Koppelelemente und die Lagerung der Hebel am gehäusefesten Grundkörper zur Verdeutlichung der Funktion,
Figur 2 eine perspektivische Ansicht des monolithischen Wägeaufnehmers, wobei einige Teile weggebrochen sind, in einer ersten Ausgestaltung,
Figur 3 eine Seitenansicht des Wägeaufnehmers aus Figur 3,
Figur 4 eine Seitenansicht des Wägeaufnehmers in einer zweiten Ausgestaltung.
Figur 5 einen Wägeaufnehmer mit Kalibriergewicht in Seitenansicht in einer ersten Ausgestaltung,
Figur 6 einen Wägeaufnehmer mit Kalibriergewicht in Seitenansicht in einer zweiten Ausgestaltung,
Figur 7 einen vertikalen Schnitt durch einen Teil des Wägeaufnehmers nach der Schnittlinie 7 -7 in Figur 5,
Figur 8 einen Wägeaufnehmer mit Kalibriergewicht in Seitenansicht in einer dritten Ausgestaltung,
Figur 9 eine Vorderansicht des Lastaufnehmers aus Figur 8,
Figur 10 einen Wägeaufnehmer mit Kalibriergewicht in Seitenansicht in einer vierten Ausgestaltung,
Figur 11 eine Vorderansicht des Lastaufnehmers aus Figur 10 und
Figur 12 ist eine perspektivische Ansicht einer weiteren Ausführungsform mit angeschraubtem Kalibrieraufnahmelager.

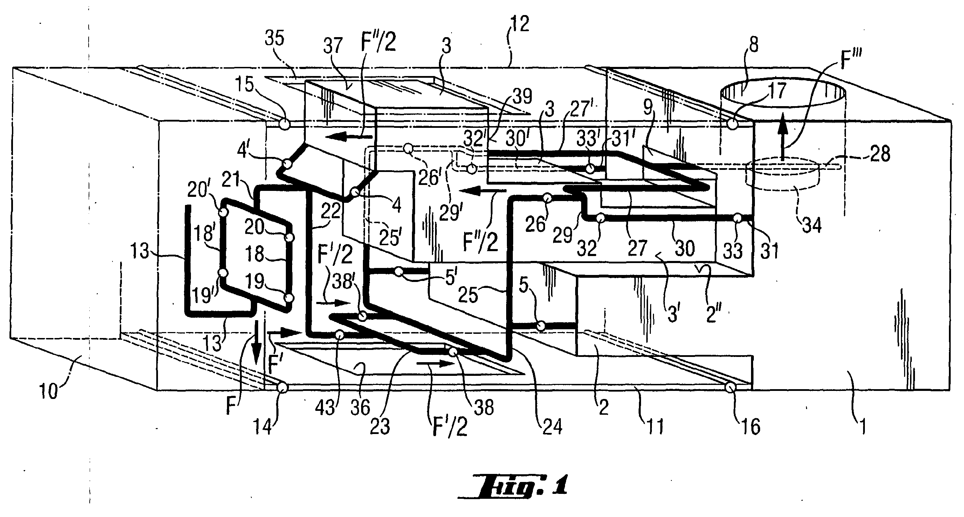

Die stark schematisierte Figur 1 dient nur der Erläuterung der Anordnung und Funktion des Hebelsystems, der Lagerung der einzelnen Hebel und der Anordnung der Koppelelemente.
Die beweglichen Hebel und Koppelelemente sind nur als dicke Striche gezeichnet. Die Gelenkstellen, die durch Materialdünnstellen gebildet werden, sind durch Kreise angedeutet.

Der homogene Materialblock aus Metall, Keramik oder Kunststoff für den Wägegeber hat etwa die in Figur 1 zwischen den Bezugzeichen 1 und 10 angedeutete quaderförmige Umrissform.

Man erkennt einen gehäusefesten Grundkörper 1, der einen vorkragenden Bereich (Teil) 2 und 3 aufweist. Der Bereich 2 hat die volle Breite des Grundkörpers 1, während der Bereich 3 schmaler ist (ca. 40 % vom Grundkörper 1). Im Grundkörper 1 befindet sich ein rundes Loch 8, das einen (nicht gezeichneten) zylindrischen Permanentmagneten aufnimmt, der von unten in das Loch 8 einsetzbar und an integrierten Befestigungslaschen festlegbar ist. Der Grundkörper 1 weist weiterhin ein waagerecht verlaufendes, durchgehendes Durchgangsloch 9 mit rechteckigem Querschnitt auf.

Ganz links in Figur 1 ist der Lastaufnehmer 10 eingezeichnet, der durch einen oberen Lenker 12 und einen unteren Lenker 11 mit dem Grundkörper 1 verbunden ist. Die Gelenkstelle zwischen dem oberen Lenker 12 und dem Lastaufnehmer 10 ist mit 15 bezeichnet und sie zieht sich über die ganze Breite des Lenkers 12 bzw. Lastaufnehmers 10 hin, die Gelenkstelle zwischen dem unteren Lenker 11 und dem Lastaufnehmer 10 ist mit 14 bezeichnet, sie zieht sich ebenfalls über die ganze Breite des Lenkers 11 bzw. Lastaufnehmers 10 hin. Die Gelenkstellen zwischen den Lenkern 11 und 12 und dem Grundkörper 1 sind mit 16 bzw. 17 bezeichnet; sie ziehen sich ebenfalls über die ganze Breite hin. Der obere Lenker 12 weist eine mittige Ausnehmung (Durchbrechung) 35 auf, in die der vorkragende Teil 3 hineinragt. Die obere Abschlussfläche als Stufung 37 des vorkragenden Teils 3 befindet sich auf der gleichen Höhe wie die Oberseite des Lenkers 12. Aus Symmetriegründen weist auch der untere Lenker 11 eine mittige Ausnehmung (Durchbrechung) 36 auf. Der obere Lenker 12 und der obere Teil des Lastaufnehmers 10 sind in Figur 1 strichpunktiert gezeichnet, wodurch eine Durchsichtigkeit dieser Bereiche zeichnerisch angedeutet werden soll; die vom oberen Lenker 12 und vom oberen Teil des Lastaufnehmers 10 eigentlich verdeckten Teile sind daher nicht gestrichelt, sondern mit durchgehenden Linien gezeichnet. - Durch die Lenker 11 und 12 mit ihren Gelenkstellen 14-17 ist der Lastaufnehmer 10 mit dem Grundkörper 1 verbunden, kann sich aber in vertikaler Richtung etwas (weniger als 1 mm) bewegen.

Die von der zu messenden Last auf dem Lastaufnehmer 10 ausgeübte Kraft wird von einem Vorsprung 13 am Lastaufnehmer 10 (der in Figur 1 linke, vertikale Teil des Vorsprunges 13 ist identisch mit der rechten Seitenfläche des Lastaufnehmers 10) über zwei Koppelelemente 18 und 18' mit den Gelenkstellen 19 und 20 bzw. 19' und 20' übertragen auf einen ersten Übersetzungshebel 21/22 (kurzer Hebelarm 21, langer Hebelarm 22), der über zwei Lagerstellen 4 und 4' am vorkragenden Bereich 3 gelagert ist. Aus der vertikalen Kraft F wird dadurch die kleinere horizontale Kraft F'. Diese Kraft F' wird über eine Gelenkstelle 43 auf ein Koppelelement 23 übertragen, dort in zwei Teilkräfte F'/2 aufgespalten und über die beiden Gelenkstellen 38 und 38' auf den kurzen Hebelarm 24 des zweiten Übersetzungshebels übertragen. Dieser zweite Hebel ist durch die Lagerstellen 5 und 5' am vorkragenden Bereich 2 gelagert. Der lange Hebelarm 25/25' des zweiten Hebels ist in zwei Teilhebel 25 und 25' aufgespalten. Der Teilhebel 25 verläuft vor dem vorkragenden Bereich 3, der andere Teilhebel 25' hinter dem vorkragenden Bereich 3. Durch den Übersetzungshebel 24/25/25' wird die horizontale Kraft F' in die kleinere, ebenfalls horizontale Kraft F'' umgewandelt, wobei jeweils die Hälfte (F''/2) am Ende des vorderen Teilhebels 25 und des hinteren Teilhebels 25' wirkt. Von dort werden die beiden Kräfte über Koppelgelenke 26 und 26' auf den dritten Übersetzungshebel 29/29'/27/27'/28 übertragen. Dabei ist 29/29' der kurze Hebelarm und 27/27'/28 der lange Hebelarm. Dieser dritte Hebel ist über zwei Abstützelemente 30 und 30' an den Punkten 31 und 31' am Grundkörper 1 gelagert.

Die Gelenkstelle zwischen Abstützelement 30 und dem Grundkörper 1 ist mit 33 und die Gelenkstelle zwischen Abstützelement 30 und dem kürzeren Hebelarm 29 des dritten Hebels mit 32 bezeichnet. Entsprechend ist die Gelenkstelle zwischen Abstützelement 30' und dem Grundkörper 1 mit 33' und die Gelenkstelle zwischen Abstützelement 30' und dem kürzeren Hebelarm 29' des dritten Hebels mit 32' bezeichnet. Der nicht mehr aufgespaltene Teil 28 des längeren Hebelarms 27/27'/28 verläuft im Durchgangsloch (Loch) 9 des Grundkörpers 1 und trägt in seinem hinteren Bereich die Spule 34, die sich im Magnetfeld des Permanentmagneten befindet. Diese Spule 34 erzeugt eine vertikale Kraft F''', die letztendlich proportional zur Kraft F am Lastaufnehmer 10 ist.

Die vorstehend benannten Elemente sind im allgemeinen Sinne Kraftübertragungselemente, auch wenn einzelne Elemente wie z. B. die Elemente 11,12 und 30,30' im Wesentliche vertikale Führungselemente oder Abstützelemente sind, jedoch die eigentlichen Elemente zur Kraftübertragung gegen schädliche Seitenkräfte schützen.

Die einzelnen Teile des Kraftübertragungssystems sind entweder mittig in der vertikalen Symmetrieebene des gesamten Materialblockes angeordnet (z. B. der erste Hebel 21/22 oder der nicht aufgespaltene lange Hebelarm 28 des dritten Hebels) oder aber aufgeteilt und symmetrisch zur vertikalen Symmetrieebene auf beiden Seiten des vorkragenden Teils 3 angeordnet (z. B. der lange Hebelarm 25 und 25' des zweiten Hebels oder die Hebelarme 29 und 27 bzw. 29' und 27' des dritten Hebels). Die aufgeteilten Bereiche übertragen dabei jeweils die Hälfte der vom jeweiligen Hebel, Koppelelement etc. übertragenen Kraft. Der Halter der runden Spule 34 ist ebenfalls monolithischer Bestandteil des Hebelarms 28 und ist vorzugsweise dem Umriss der Spule 34 angepasst. Alle beschriebenen Teile mit Ausnahme der Spule 34 und des nicht gezeichneten Permanentmagneten sind dabei aus einem einzigen Materialblock herausgearbeitet.

Vom Geometrieprinzip sind demnach die aneinanderggekoppelten einzelnen Kraftübertragungselemente 10,11,12,13 bis 34,38,38',43 entweder symmetrisch zu einer durch den nicht aufgespaltenen langen Hebelarm 28 (auch Spulenträger) und den Lastaufnehmer 10 verlaufenden vertikalen Mittellängsebene in dieser oder geometrisch und kraftmäßig aufgeteilt und symmetrisch beabstandet von dieser Mittellängsebene angeordnet und sind (mit Ausnahme der Spule 34) Bestandteil des homogenen Materialblocks, wobei sich der vorkragende Teil 2,3 des Grundkörpers 1 teilweise zwischen geometrisch und kraftmäßig aufgeteilten Kraftüberragungselementen 11,12; 25,25'; 27,27'; 29,29'; 30,30' erstreckt und für einen Teil der Kraftübertragungselemente 22; 24 Widerlager bzw. Lagerstellen 4,4'; 5,5' bildet. Die Anordnung von vertikalen und horizontalen Stufungen (z.B. bei 37,39; 2'',3') in den vorkragenden Teilen 2,3 schafft weitere Freiräume für den Zugang von Bearbeitungswerkzeugen für das Herausarbeiten der Einzelelemente aus dem Materialblock. Weitere Stufungen auf der Unter- und Oberseite der vorkragenden Teile 2,3 sind in Fig. 1 erkennbar, jedoch nicht mit Bezugszeichen belegt.

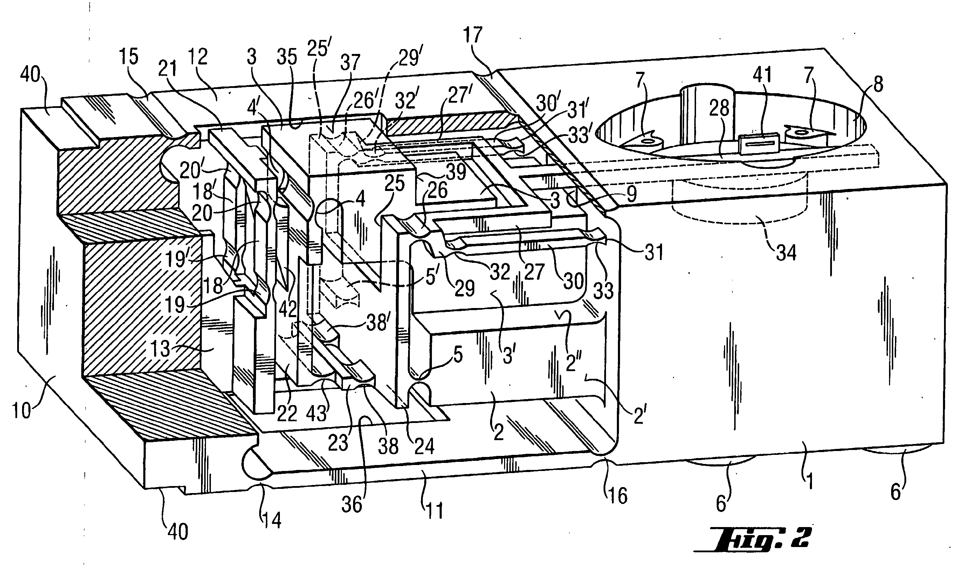

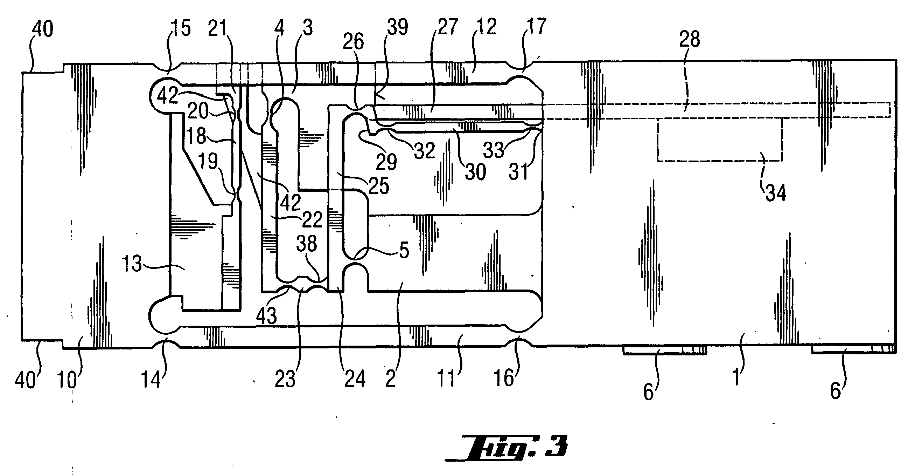

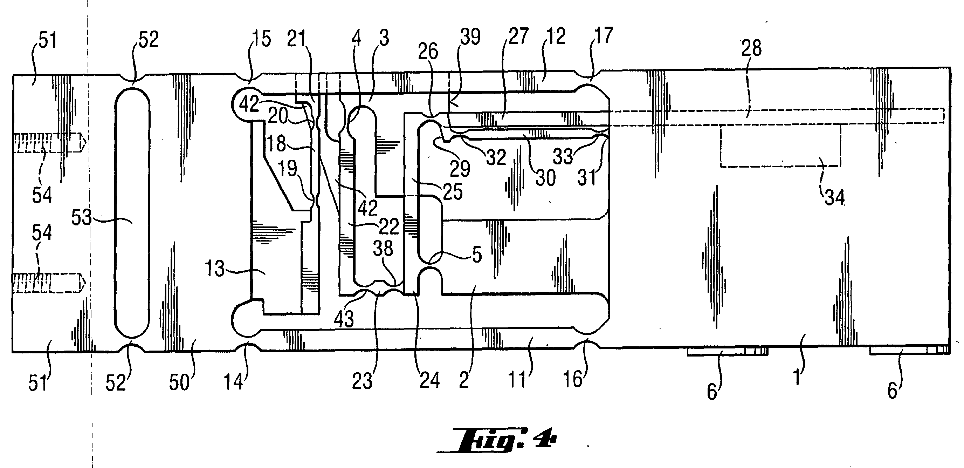

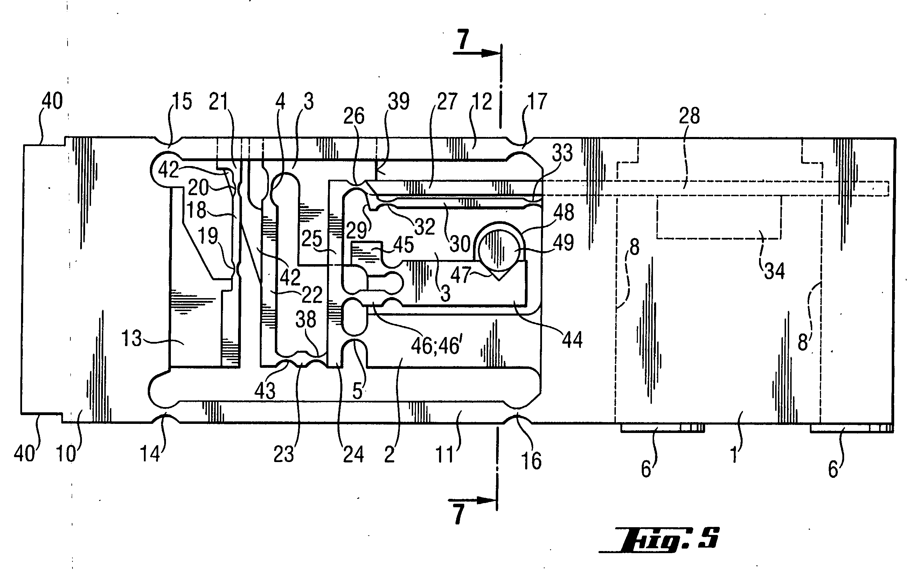

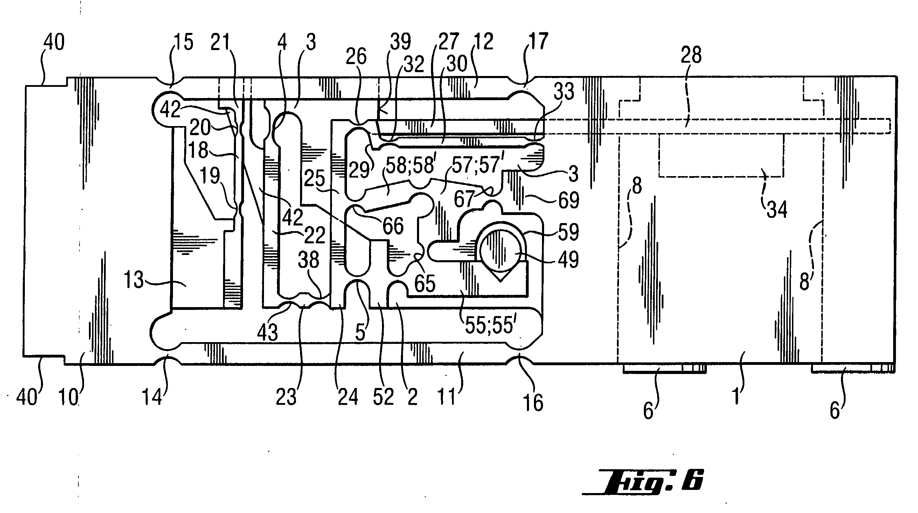

In Figur 2 ist ein nach dem vorstehenden Bauprinzip realisierter Wägeaufnehmer in einer ersten Ausgestaltung perspektivisch dargestellt. In Figur 3 ist derselbe Wägeaufnehmer in Seitenansicht gezeigt. Alle Hebel, Gelenke und Koppelelemente sind mit denselben Bezugszeichen wie in Figur 1 bezeichnet, auch wenn sie in Figur 1 zeichnerisch anders dargestellt sind als in Figur 2 und 3.

Man erkennt rechts in Figur 2 und 3 den gehäusefesten Grundkörper 1, der auf seiner Unterseite flache Fußbereiche 6 aufweist, an denen dieser am Gehäuse der Waage festgeschraubt werden kann. Anstelle der integrierten Fußbereiche 6 können diese Bestandteil eines Gehäuses, einer Montageplatte oder eines Chassis sein. Der Grundkörper 1 setzt sich nach links in den vorkragenden Teil 2 und den vorkragenden Teil 3 fort (vertikale Stufung). Da sich die obere Abschlussfläche 37 des vorkragenden Teils 3 auf derselben Höhe wie die Oberseite des oberen Lenkers 12 befindet, ist diese obere Abschlussfläche 37 in der Seitenansicht von Figur 3 nicht erkennbar. Nur die vertikale Rückseite bzw. Stufung 39 des vorkragenden Teils 3 ist in Figur 3 teilweise erkennbar.

Der obere Lenker 12 ist in Figur 2 z. T. weggebrochen, um die inneren Bereiche des Wägeaufnehmers sichtbar zu machen. Genauso ist ein Teil des Lastaufnehmers 10 weggebrochen. Der untere Lenker 11 ist demgegenüber ganz dargestellt. Man erkennt die sich über die gesamte Breite des Lenkers erstreckenden Materialdünnstellen, die die in Figur 1 dargestellten Gelenkstellen 14, 15, 16 und 17 bilden und nachfolgend auch als Dünnstellen bezeichnet werden.

Die zu messende Kraft wird vom Lastaufnehmer 10 über den stabilen Vorsprung 13 und über zwei Koppelelemente 18 und 18' auf den kurzen Hebelarm 21 des ersten Hebels übertragen. Die Gelenkstellen 19, 19', 20 und 20' sind als Dünnstellen an den Enden der Koppelelemente 18 und 18' gut erkennbar. Weiter erkennt man eine dreieckförmige Verstärkung 42 zwischen dem kurzen Hebelarm 21 und dem langen Hebelarm 22 des ersten Hebels. Der erste Hebel 21/22 ist über die Lagerstellen 4 und 4' am vorkragenden Teil 3 gelagert.

Vom Ende des langen Hebelarms 22 wird die untersetzte Kraft über eine Gelenkstelle 43 auf das Koppelelement 23 übertragen und von dort über die beiden Gelenkstellen 38 und 38' auf den kurzen Hebelarm 24 des zweiten Hebels. Der zweite Übersetzungshebel 24/25/25' ist über Lagerstellen 5 und 5' am vorkragenden Teil 2 gelagert. Die Lagerstelle 5' ist in Figur 2 gestrichelt dargestellt, da sie hinter dem zweiten Übersetzungshebel 24/25/25' verborgen ist. In Figur 3 ist die Gelenkstelle 5' hinter der Gelenkstelle 5 verborgen. Der obere Teil des langen Hebelarms 25/25' ist gabelförmig aufgespalten: Der eine Teil des langen Hebelarms 25 befindet sich auf der einen Seite des vorkragenden Teils 3 - in Figur 3 vor dem vorkragenden Teil 3 - , der andere Teil des langen Hebelarms 25' befindet sich auf der anderen Seite des vorkragenden Teils 3 - in Figur 3 hinter dem vorkragenden Teil 3.

Dementsprechend werden die beiden Kräfte von den langen Hebelarmen 25 und 25' des zweiten Hebels über zwei Teilkoppelgelenke 26 und 26' auf die beiden Teile 29 und 29' des aufgespaltenen kurzen Hebelarms des dritten Übersetzungshebels 29/29'/27/27'/28 übertragen. Der dritte Hebel ist über Abstützelemente 30 und 30' mit den Gelenkstellen 32 und 33 bzw. 32' und 33' am Grundkörper 1 gelagert. Der lange Hebelarm 27,27' des dritten Hebels ist in seinem Anfangsbereich aufgespalten und wird am Ende wieder in einem Teil 28 zusammengeführt. An diesem gemeinsamen nicht aufgespaltenen Teil 28 des langen Hebelarmes ist die Spule 34 befestigt. Die beiden gabelförmigen Schenkel bzw. die aufgespaltenen Teile 27 und 27' des langen Hebelarmes des dritten Hebels umgreifen den vorkragenden Teil 3 symmetrisch. Die Abstützelemente 30 und 30' für den dritten Hebel befinden sich wiederum seitlich außerhalb der beiden Schenkel 27 und 27'.

Die Breitenverhältnisse können beispielsweise folgendermaßen sein: Der vorkragende Teil 3 hat etwa 40 % der Breite des Grundkörpers 1, die Hebelarme 27 und 27' haben je eine Breite von knapp 10 % der Breite des Grundkörpers 1, die daneben befindlichen Abstützelemente 30 und 30' haben je eine Breite von ebenfalls knapp 10 % der Breite des Grundkörpers 1. Aufgrund der Beabstandung zwischen Hebelarm 27 und Abstützelement 30 haben dann das Teilkoppelgelenk bzw. die Dünnstelle 26 und der kurze Hebelarm 29 eine Breite von gut 20 % der Breite des Grundkörpers 1. Dasselbe gilt für das Teilkoppelgelenk bzw. die Dünnstelle 26' und den kurzen Hebelarm 29'. Einschließlich der Beabstandung zwischen dem Hebelarm 27 und dem vorkragenden Teil 3 ergibt sich dadurch ein gesamter Platzbedarf in der Breite von etwa 85 % der Breite des Grundkörpers 1. Neben den Abstützpunkten 31 und 31' der Abstützelemente 30 und 30' bleibt also jeweils noch etwa 7,5 % der Breite des Grundkörpers 1 an Platz. Auch der vorkragende Teil 2 weist dieselbe Breite von etwa 85 % der Breite (horizontale Stufung 2',3') des Grundkörpers 1 auf (In Figur 1 ist zur Vereinfachung der vorkragende Teil 2 genauso breit wie der Grundkörper 1 gezeichnet und das Abstützelement 30 und der Abstützpunkt 31 ganz an den Rand verschoben.)

Im Grundkörper 1 befindet sich weiterhin ein durchgehendes vertikales Loch 8, in das der (nicht dargestellte) Permanentmagnet von unten her eingeschoben werden kann. Dabei dienen vier Befestigungslaschen 7 als Anschlag und zum Festschrauben des Permanentmagneten. Auf der Oberseite des langen Hebelarms 28 des dritten Hebels ist in Figur 2 zusätzlich der Schlitz eines optischen Lagensensors 41 angedeutet, der in bekannter Weise über einen Regelverstärker den Strom durch die Spule 34 steuert.

Das Loch 8 berührt den Rand des gehäusefesten Bereiches 1 an keiner der Seitenflächen, vielmehr bleibt überall eine Wand von mindestens 5 mm Wandstärke stehen. Dies verleiht dem gehäusefesten Bereich 1 eine große Stabilität, sodass die Verformung auch unter großen Kräften im Lenker (bei ausmittiger Lage des Wägegutes auf der Waagschale) minimal bleibt. Auch das horizontale Durchgangsloch 9 durch den gehäusefesten Grundkörper 1 ist so klein wie fertigungstechnisch möglich ausgeführt; insbesondere bleibt oberhalb des Durchgangsloches 9 noch mindestens 5 mm Material stehen. Verglichen mit einem nach oben offenen Graben zum Freifräsen des Hebelarms 28 wird dadurch die Stabilität des gehäusefesten Grundkörpers 1 wesentlich erhöht.
Weiter ist am Lastaufnehmer 10 auf der Oberseite und der Unterseite je eine Stufe (Ausbruchsfläche) 40 erkennbar. Die Höhe dieser Stufe 40 ist so bemessen, dass sich die waagerechte Fläche der Stufe 40 genau in der Höhe der neutralen Faser der Dünnstellen 15 und 17 des oberen Lenkers 12 bzw. in der Höhe der neutralen Faser der Dünnstellen 14 und 16 des unteren Lenkers 11 befindet. An diesen waagerechten Flächen wird die Waagschale bzw. die Unterschale mittels eines C-förmigen Zwischenteils am Lastaufnehmer 10 befestigt. Durch diese Ausgestaltung der Waagschalen/Unterschalen-Befestigung wird das bei außermittiger Belastung der Waagschale auftretende Drehmoment als waagerechtes Kräftepaar direkt in die Lenker 11 und 12 eingeleitet und verursacht keine Torsion des Lastaufnehmers 10.

Die Stufen 40 am Lastaufnehmer 10 sind in Figur 2 und 3 über die ganze Breite des Lastaufnehmers 10 gezeichnet. Selbstverständlich ist es auch möglich, diese Stufen nur an den Stellen vorzusehen, an denen die Waagschale/Unterschale wirklich befestigt ist, um den Lastaufnehmer 10 möglichst wenig zu schwächen.

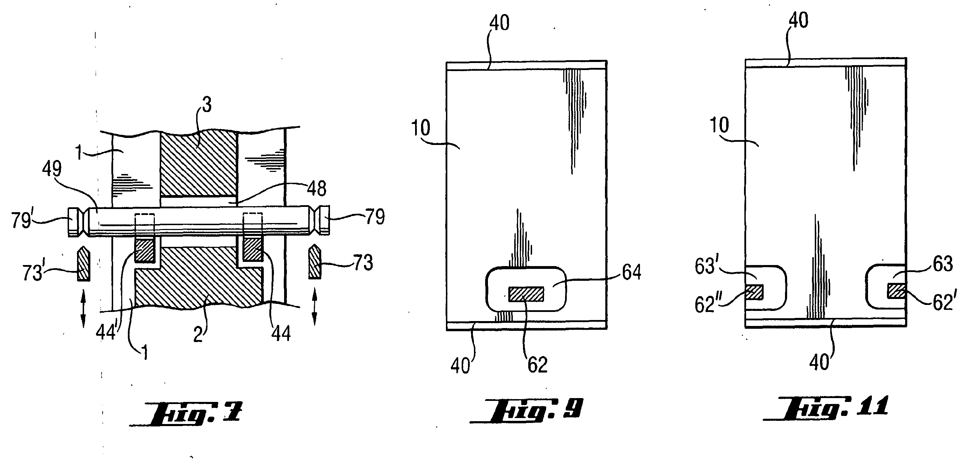

In Figur 4 ist eine zweite Ausgestaltung des erfindungsgemäßen Wägeaufnehmers in Seitenansicht dargestellt. Bis auf den Lastaufnehmer sind alle Teile dieser zweiten Ausgestaltung mit der schon beschriebenen ersten Ausgestaltung identisch. Die identischen Teile sind mit den gleichen Bezugszahlen bezeichnet und werden nicht nochmals erläutert. Der Lastaufnehmer der zweiten Ausgestaltung besteht aus einem rechten Teil 50, an dem die Lenker 11 und 12 angreifen und einem linken Teil 51, an dem über die beiden Gewindebohrungen 54 die Schale bzw. die Unterschale befestigt ist. Rechter Teil 50 und linker Teil 51 sind durch einen vertikalen Schlitz (Ausnehmung) 53, der an seinem oberen und unteren Ende je einen Verbindungssteg (Materialsteg) 52 stehen lässt, voneinander getrennt. Die Verbindungsstege 52 befinden sich dabei genau auf der Höhe der Dünnstelle 15 bzw. der Dünnstelle 14. Sie sind außerdem so stabil, dass sie neben den horizontalen Kräften bei ausmittiger Lage des Wägegutes auch die vertikale Gewichtskraft des Wägegutes übertragen, ohne sich nennenswert zu verbiegen. Durch diese Bauart werden die waagerechten Kräfte bei ausmittiger Lage des Wägegutes auf der Waagschale wieder genau in der Höhe des Lenkers 12 in den rechten Teil 50 des Lastaufnehmers eingeleitet und so die Gefahr einer Verbiegung des rechten Teils 50 des Lastaufnehmers und dadurch eine Änderung des vertikalen Abstandes der Gelenkstellen 14 und 15 der beiden Lenker 11,12 minimiert.

Auch diese Ausgestaltung wird bis auf die Spule 34 und den Permanentmagneten aus einem einzigen Materialblock herausgearbeitet.

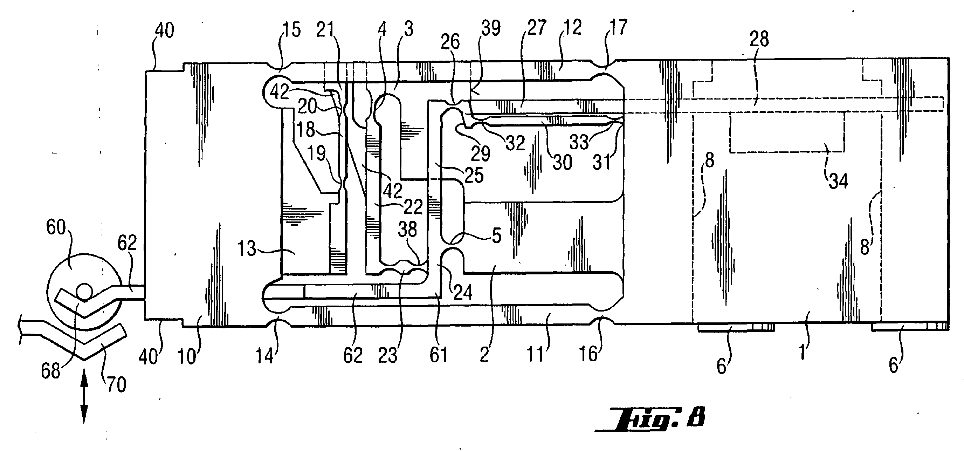

Die nachfolgenden Ausführungsformen gemäss Fig. 5 bis 11 mit Kalibriergewichtsaufnahme sind im Prinzip wie die Ausführungsformen nach Fig. 1 bis 4 aufgebaut, sodass bezüglich der Elemente in den rückwärtigen Ebenen auf diese Figuren verwiesen wird.
Man erkennt in der Seitenansicht in Figur 5 einen gehäusefesten Grundkörper 1, der auf seiner Unterseite flache Fußbereiche 6 aufweist, an denen er am Gehäuse der Waage festgeschraubt werden kann. Der Grundkörper 1 setzt sich nach links in einen vorkragenden Bereich 2 und einen vorkragenden Bereich 3 fort. Der Bereich 2 hat eine Breite von ca. zwei Drittel der Breite des Grundkörpers 1, der Bereich 3 ist noch schmaler (ca. 40 % vom Grundkörper 1). Im Grundkörper 1 befindet sich ein rundes Loch 8, das einen (nicht gezeichneten) zylindrischen Permanentmagneten aufnimmt.

Ganz links in Figur 5 ist der Lastaufnehmer 10 eingezeichnet, der durch einen oberen Lenker 12 und einen unteren Lenker 11 mit dem Grundkörper 1 verbunden ist. Die Gelenkstelle zwischen dem oberen Lenker 12 und dem Lastaufnehmer 10 ist mit 15 bezeichnet und sie zieht sich über die ganze Breite des Lenkers bzw. Lastaufnehmers hin, die Gelenkstelle zwischen dem unteren Lenker 11 und dem Lastaufnehmer 10 ist mit 14 bezeichnet, sie zieht sich ebenfalls über die ganze Breite des Lenkers bzw. Lastaufnehmers hin. Die Gelenkstellen zwischen den Lenkern 11 und 12 und dem Grundkörper 1 sind mit 16 bzw. 17 bezeichnet, sie ziehen sich ebenfalls über die ganze Breite hin. Der obere Lenker 12 weist eine mittige Ausnehmung auf, in die der vorkragende Teil 3 hineinragt. (Die obere Abschlussfläche des vorkragenden Teils 3 befindet sich auf der gleichen Höhe wie die Oberseite des Lenkers 12 und ist in der Seitenansicht daher nicht erkennbar. Nur die vertikale Rückseite bzw. Stufung 39 des vorkragenden Teils 3 ist in Figur 5 teilweise erkennbar.) - Durch die Lenker 11 und 12 mit ihren Gelenkstellen ist der Lastaufnehmer 10 mit dem Grundkörper verbunden, kann sich aber in vertikaler Richtung etwas bewegen.

Die zu messende Kraft wird vom Lastaufnehmer 10 über den stabilen Vorsprung 13 und über Koppelelemente 18 mit den Gelenkstellen 19 und 20 auf den kurzen Hebelarm 21 des ersten Hebels übertragen. Der lange Hebelarm des ersten Hebels ist mit 22 bezeichnet. Weiter erkennt man eine dreieckförmige Verstärkung 42 zwischen dem kurzen Hebelarm 21 und dem langen Hebelarm 22 des ersten Hebels. Der erste Hebel 21/22 ist über Lagerstellen 4 am vorkragenden Teil 3 gelagert.

Vom Ende des langen Hebelarms 22 wird die untersetzte Kraft über eine Gelenkstelle 43 auf das Koppelelement 23 übertragen und von dort über Gelenkstellen 38 auf den kurzen Hebelarm 24 des zweiten Hebels. Der zweite Hebel 24/25 ist über Lagerstellen 5 am vorkragenden Teil 2 gelagert. Der obere Teil des langen Hebelarms 25, 25' ist gabelförmig aufgespalten: Der eine Teil befindet sich auf der einen Seite des vorkragenden Teils 3 - in Figur 5 vor dem vorkragenden Teil 3 - , der andere Teil befindet sich auf der anderen Seite des vorkragenden Teils 3 - in Figur 5 hinter dem vorkragenden Teil 3 und damit nicht erkennbar.

Von dort werden die beiden Kräfte von den langen Hebelarmen 25, 25' des zweiten Hebels über zwei Teilkoppelgelenke 26, 26' auf die beiden Teile des aufgespaltenen kurzen Hebelarms 29, 29' des dritten Hebels 29,29'/27,27'/28 übertragen. Der dritte Hebel ist über Abstützelemente 30, 30' mit den Gelenkstellen 32, 32' und 33, 33' am Grundkörper 1 gelagert. Der lange Hebelarm 27, 27' des dritten Hebels ist in seinem Anfangsbereich aufgespalten und wird am Ende wieder in einem Teil zusammengeführt. An diesem gemeinsamen nicht aufgespaltenen Teil 28 des langen Hebelarmes 27, 27' ist die Spule 34 befestigt. Die gabelförmigen Schenkel des langen Hebelarmes 27, 27' des dritten Hebels umgreifen den vorkragenden Teil 3 symmetrisch. Die Abstützelemente 30, 30' für den dritten Hebel befinden sich wiederum seitlich außerhalb der beiden Schenkel des langen Hebelarmes 27, 27'.

Weiter ist am Lastaufnehmer 10 auf der Oberseite und der Unterseite je eine Stufe 40 erkennbar. Die Höhe dieser Stufe ist so bemessen, dass sich die waagerechte Fläche der Stufe 40 genau in der Höhe der neutralen Faser der Dünnstellen 15 und 17 des oberen Lenkers 12 bzw. in der Höhe der neutralen Faser der Dünnstellen 14 und 16 des unteren Lenkers 11 befindet. An diesen waagerechten Flächen wird die Waagschale bzw. die Unterschale mittels eines C-förmigen Zwischenteils am Wägeaufnehmer befestigt. Durch diese Ausgestaltung der Waagschalen/Unterschalen-Befestigung wird das bei außermittiger Belastung der Waagschale auftretende Drehmoment als waagerechtes Kräftepaar direkt in die Lenker 11 und 12 eingeleitet und verursacht keine Torsion des Lastaufnehmers 10.

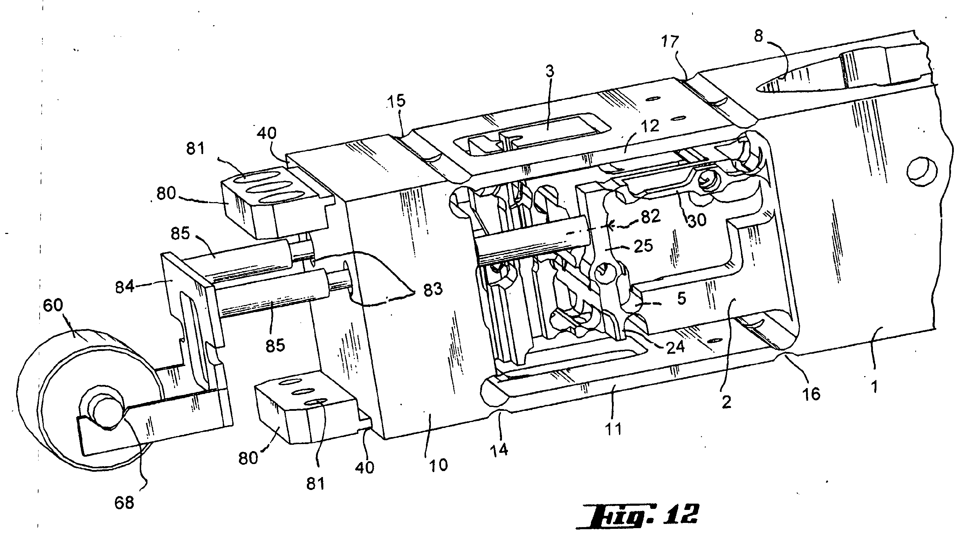

Zur Durchführung einer Kalibrierung/Justierung ist der Wägeaufnehmer nach Figur 5 und 11 mit einem Paar zusätzlicher Hebel 44, 44' (siehe auch Figur 7) ausgestattet, jeder ist an einem seitlichen Vorsprung 45 am vorkragenden Bereich 3 gelagert. Der zusätzliche Hebel 44, 44' drückt über ein Paar Koppelelemente 46 auf den mittleren Teil des langen Hebelarms 25, 25' des zweiten Übersetzungshebels 24, 24'/25, 25'. Am Ende des zusätzlichen Hebels 44, 44' weist dieser eine Vertiefung 47 auf, in die beim Kalibrieren oder Justieren ein Kalibriergewicht 49 abgelegt werden kann. Die für das Anheben bzw. Absenken des Kalibriergewichtes 49 notwendige Vorrichtung befindet sich außerhalb des monolithischen Materialblockes und ist der Übersichtlichkeit halber in Figur 5 nicht eingezeichnet. Verschiedene Bauformen dieser Hubvorrichtung sind bekannt und müssen daher hier nicht im Einzelnen erläutert werden. Schematisch ist eine Hubvorrichtung in Figur 7 bei 73, 73' angedeutet.

Das Kalibriergewicht 49 ist zylinderförmig und erstreckt sich durch einen Durchbruch 48 im vorkragenden Bereich 3 hindurch auch auf die andere, in Figur 5 hinter der Zeichenebene gelegene Seite des vorkragenden Bereiches 3. Hinter der Zeichenebene befindet sich ein gleicher zusätzlicher Hebel 44 mitsamt seiner Lagerung und einem Koppelelement 46. Das Kalibriergewicht 49 liegt daher in der in Figur 5 und 7 gezeichneten Kalibrierstellung auf den beiden zusätzlichen Hebeln 44, 44' auf. Seine Gewichtskraft wird über die beiden Koppelelemente 46 als waagerechte Kraft in die beiden langen Hebelarme 25, 25' des zweiten Übersetzungshebels 24, 24'/25, 25' eingeleitet, wo die Kraft vom Lastaufnehmer schon deutlich reduziert ist. Dadurch und durch die zusätzliche Hebelwirkung des zusätzlichen Hebels 44, 44' reicht ein Kalibriergewicht 49 von z. B. 300g, um eine Belastung von 50 kg am Lastaufnehmer zu simulieren. Das Kalibriergewicht 49 ist daher auch bei hohen Nennlasten des Wägeaufnehmers so klein und so leicht, dass die Baugröße und das Gewicht des Wägeaufnehmers durch das Kalibriergewicht 49 nicht wesentlich vergrößert werden.

Die zusätzlichen Hebel 44, 44', deren Lagerung und die Koppelelemente 46 sind monolithischer Bestandteil des Metallblockes, aus dem auch der übrige Teil des Wägeaufnehmers herausgearbeitet ist. Damit ergeben sich auch für die Kalibriergewichtsauflage die Vorteile der monolithischen Bauweise, wie z. B. große Langzeitkonstanz und geringer Temperatureinfluss.

In der normalen Wägestellung (zum Wiegen einer am Laufaufnehmer 10 angreifenden Last) ist das Kalibriergewicht 49 durch eine nicht dargestellte, gehäusefest angeordnete Hubvorrichtung angehoben und wird gegen die Oberseite des Durchbruches 48 im vorkragenden Bereich 3 als Anschlag gedrückt (gleichzeitig Transportsicherung). Eine Wirkverbindung zu den zusätzlichen Hebeln 44, 44' besteht dann nicht mehr.

Eine zweite Ausgestaltung des Wägeaufnehmers mit Kalibriergewicht ist in Figur 6 gezeigt. Gleiche Teile wie in der ersten Ausgestaltung gemäß Figur 5 sind mit den gleichen Bezugszahlen bezeichnet und werden nicht noch einmal erläutert. In dieser zweiten Ausgestaltung ist neben dem zusätzlichen Hebel 55, der an einem seitlichen Vorsprung 56 am vorkragenden Bereich 2 gelagert ist, ein Kniehebelsystem 57/58 vorhanden, das die an der Dünnstelle 65 wirkende vertikale Kraft vergrößert und als horizontale Kraft an der Dünnstelle 66 in den langen Hebelarm 25 des zweiten Übersetzungshebels 24/25 einleitet. Das Kniehebelsystem 57/58 ist dabei über die Dünnstelle 67 an einem Vorsprung 69 des Grundkörpers 1 gelagert und stützt sich dort ab. Das Kalibriergewicht 49 erstreckt sich wie in der ersten Ausgestaltung durch einen Durchbruch 59 im vorkragenden Bereich 2 hindurch bis hinter die Zeichenebene. Hinter der Zeichenebene auf der Rückseite des vorkragenden Bereiches 2 ist ebenfalls ein zusätzlicher Hebel 55 und ein Kniehebelsystem 57/58 vorhanden, sodass die Gewichtskraft des Kalibriergewichtes 49 wieder in zwei Teilkräften in die beiden Hebelarme 25 des zweiten Übersetzungshebels 24/25 eingeleitet wird. Die Hubvorrichtung für das Anheben bzw. Absenken des Kalibriergewichtes 49 ist der Übersichtlichkeit halber wieder nicht eingezeichnet. Die Funktionsweise dieser zweiten Ausgestaltung ist genauso wie bei der ersten Ausgestaltung. Durch die zusätzliche Kniehebelanordnung kann das Kalibriergewicht 49 bei gleicher Höchstlast der Waage noch kleiner und leichter ausgebildet sein.

In beiden Ausgestaltungen kann das zylindrische Kalibriergewicht 49 vorteilhafterweise in seiner Längsachse länger sein als die Breite des monolithischen Blockes, damit die Hubvorrichtung (73,73' in Figur 7) für das Kalibriergewicht auf beiden Seiten seitlich am feststehenden Teil also am Grundkörper 1 des monolithischen Blockes - angebracht sein kann und die Hubvorrichtung das Kalibriergewicht an den überstehenden Enden 79, 79' anheben kann. Damit kann die Wägezelle einschließlich der Kalibriervorrichtung und vorzugsweise mit einer Elektronik auf einer Montageplatte oder einem Chassis montiert als messtechnisch abgeglichenes Modul in Waagengehäusen oder Wägeanlagen eingesetzt werden.

In den Figuren 8 und 9 ist eine dritte Ausgestaltung des Wägeaufnehmers mit Kalibriergewicht gezeigt. Figur 8 ist eine Seitenansicht, Figur 9 eine Vorderansicht auf den Lastaufnehmer 10. Gleiche Teile wie in den ersten Ausgestaltungen sind wieder mit den gleichen Bezugszahlen bezeichnet und werden nicht noch einmal erläutert. Der Wägeaufnehmer in Figur 8 und 9 weist am zweiten Übersetzungshebel 24/25, 25' eine kurze vertikale Verlängerung 61 auf, die in einen horizontalen Hebelarm 62 übergeht. Dieser horizontale Hebelarm 62 durchsetzt den Lastaufnehmer 10, der dazu in seiner Symmetrieebene eine rechteckige Ausnehmung 64 aufweist. Diese Ausnehmung 64 ist in der Vorderansicht auf den Lastaufnehmer 10 in Figur 9 erkennbar. Der horizontale Hebel 62 weist an seinem (in Figur 8 linken) Ende eine Vertiefung 68 als Aufnahmelager auf, in die beim Kalibrieren oder Justieren ein Kalibriergewicht 60 abgelegt werden kann. In Figur 8 ist das Kalibriergewicht 60 in dieser Kalibrierstellung gezeichnet. Die für das Anheben bzw. Absenken des Kalibriergewichtes notwendige Vorrichtung ist in Figur 8 nur durch eine Aufnahme 70 angedeutet, die vertikal beweglich ist. - In dieser Ausgestaltung ist also der bereits vorhandene Übersetzungshebel 24/25, 25' durch den zusätzlichen Hebelarm 61/62 verlängert und so eine Auflagemöglichkeit für das Kalibriergewicht 60 geschaffen. Der zusätzliche Hebelarm 61/62 ist aus dem Materialblock des Wägeaufnehmers mit herausgearbeitet und dadurch monolithischer Bestandteil des Wägeaufnehmers.

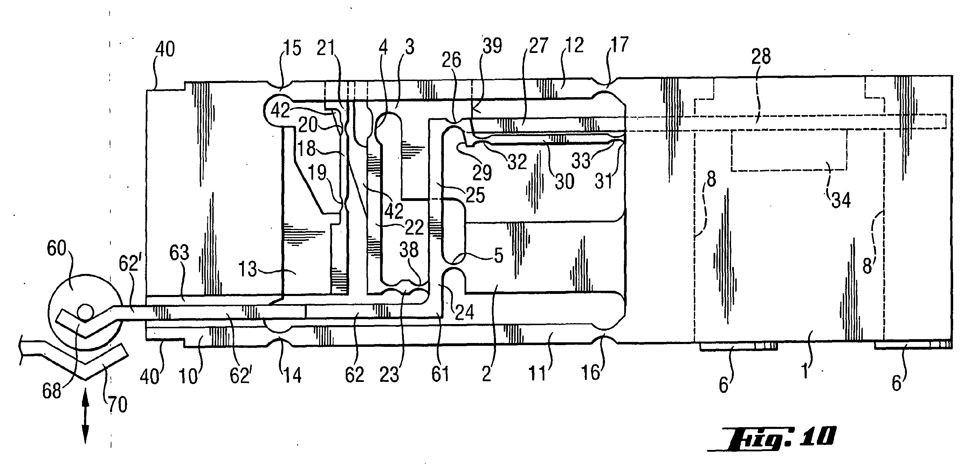

Eine vierte Ausgestaltung des Wägeaufnehmers mit Kalibriergewicht ist in den Figuren 10 und 11 gezeigt. Figur 10 ist eine Seitenansicht, Figur 11 eine Vorderansicht auf den Lastaufnehmer 10. Gleiche Teile wie in der dritten Ausgestaltung gemäß den Figuren 8 und 9 sind mit den gleichen Bezugszahlen bezeichnet und werden nicht noch einmal erläutert. In dieser vierten Ausgestaltung ist der Hebelarm 62 für das Kalibriergewicht 60 in seinem mittleren Teil 62'/62'' gabelförmig aufgespalten. Der eine Teil 62' befindet sich in einer Nut 63 im Lastaufnehmer 10, die in Figur 10 auf der Vorderseite des Lastaufnehmers 10 eingefräst ist (in Figur 11 auf der rechten Seite); der andere Teil 62'' befindet sich in Figur 10 auf der Rückseite des Lastaufnehmers 10 und ist deshalb nur in Figur 11 erkennbar und befindet sich in einer Nut 63' auf der linken Seite des Lastaufnehmers 10. Im Bereich links vom Lastaufnehmer 10 in Figur 10 sind die beiden Teile 62'/62'' vorzugsweise zu einer Gabel mit Verbindungssteg als Hebelarm 62 wieder zusammengeführt und dieser trägt dort das Kalibriergewicht 60 in seiner Aufnahme 68. Bei den in Figur 8 und 10 gezeigten Ausführungsformen kann das Ende des horizontalen Hebelarmes 62 und 62' mit dem Aufnahmelager 68 für des Kalibriergewichtes 60 auch ganz oder zumindest teilweise in die Kontur des Lastaufnehmers 10 in einer zur Aufnahme 70 offenen Ausnehmung einbezogen sein.

Allen bisher beschriebenen Ausführungsformen mit Kalibriergewicht ist gemeinsam, dass jeweils ein einziges Kalibriergewicht direkt und unmittelbar mit dem dafür vorgesehenen Übersetzungshebel für den Kalibriervorgang in Wirkverbindung gebacht werden kann. Diese Ausführungsformen eignen sich besonders für hoch auflösende Waagen. In mehreren bevorzugten Ausführungsformen ist das Kalibriergewicht 49 im Bereich zwischen Lastaufnehmer 10 und dem gehäusefesten Grundkörper 1 angeordnet, durchsetzt diesen Bereich in einer Durchbrechung 48, 59 quer und ist durch eine am gehäusefesten Grundkörper 1 angeordnete Hubvorrichtung 73,73' wahlweise in eine mit Kraftübertragungselementen 44,44', 55, 55' in Wirkverbindung tretende Kalibrierposition oder in eine das Kalibriergewicht 49, 59 deaktivierende Position bringbar.
Bei den in Figuren 8 und 10 gezeigten Ausführungsformen ist das Kalibriergewicht im Bereich dicht vor dem Lastaufnehmer 10 angeordnet und die das Kalibriergewicht tragenden Hebelelemente sind frei durch den Lastaufnehmer 10 hindurchgeführt. Bei diesen Ausführungsformen kann die Aufnahme für das Kalibriergewicht auch als separates Teil starr an den dafür vorgesehen Hebel angeschraubt sein, wie dies in dem Ausführungsbeispiel nach Figur 12 dargestellt ist. Diese Ausführungsform entspricht prinzipiell der in Figur 10, sodass auf die Beschreibung zu dieser Figur 10 verwiesen werden kann. Abweichend davon weist der Lastaufnehmer 10 zwei Vorsprünge 80 mit Bohrungen 81 zum Anflanschen eines Waagschalenträgers auf. Das Aufnahmelager für das Kalibriergewicht 60 umfasst ein Joch 84 mit den Vertiefungen 68 zur Aufnahme des Kalibriergewichtes 60 in der gezeigten Kalibrierposition und die beiden Stangen 85, die das Joch 84 mit dem Hebel 24, 25 verbinden. Die beiden Stangen 85 durchsetzen den Lastaufnehmer 10 frei durch die Durchbrechungen 83 und sind mit je einer Schraube 82 starr mit dem Hebel 24, 25 verschraubt. Auch bei dieser Ausführungsform ist die nicht dargestellte Kalibriergewichtsschaltung mit Hubmechanik auf einer gemeinsamen Grundplatte oder Chassis mit dem Wägeaufnehmer angeordnet.

Vorzugsweise erfolgt die Herstellung des monolithischen Teils des Wägeaufnehmers durch Fräsen. Als Material wird vorzugsweise ein Metall mit guten elastischen Eigenschaften z.B. Aluminumlegierung, eingesetzt. Die Strukturierung der Einzelelemente ist jedoch teilweise auch durch Drahterosion möglich. Denkbar ist auch eine Fertigung durch Druckgießen oder auch Spritzgießen (z. B. mit einem glasfaserverstärkten Kunststoff) in Kombination mit anderen Bearbeitungstechniken.

### Liste der bezeichneten Teile (Bezugszeichenliste)

- 1: gehäusefester Grundkörper
- 2: vorkragender Teil, Bereich am Grundkörper
- 2', 2": Stufung
- 3: vorkragender Teil, Bereich am Grundkörper
- 3': Stufung
- 4, 4': Lagerstellen für den ersten Hebel
- 5, 5': Lagerstellen für den zweiten Hebel
- 6: Fußbereiche des Grundkörpers 1
- 7: Befestigungslaschen für den Permanentmagneten
- 8: vertikales Loch für den Permanentmagneten
- 9: horizontales Durchgangsloch durch den Grundkörper
- 10: Lastaufnehmer (trägt die Waagschale)
- 11: unterer Lenker
- 12: oberer Lenker
- 13: Vorsprung am Lastaufnehmer
- 14: Gelenkstelle zwischen unterem Lenker und Lastaufnehmer, Dünnstelle
- 15: Gelenkstelle zwischen oberem Lenker und Lastaufnehmer, Dünstelle
- 16: Gelenkstelle zwischen unterem Lenker und Grundkörper, Dünnstelle
- 17: Gelenkstelle zwischen oberem Lenker und Grundkörper, Dünnstelle
- 18, 18': Koppelelemente zwischen Lastaufnehmer und ersten Hebel
- 19, 19': Gelenkstellen zwischen Koppelelement und Vorsprung am Lastaufnehmer
- 20, 20': Gelenkstellen zwischen Koppelelement und erstem Hebel
- 21: kurzer Hebelarm des ersten Hebels
- 22: langer Hebelarm des ersten Hebels
- 23: Koppelelement zwischen erstem und zweitem Hebel
- 24: kurzer Hebelarm des zweiten Hebels
- 25, 25': langer Hebelarm des zweiten Hebels
- 26, 26': Teilkoppelgelenke zwischen zweitem und drittem Hebel
- 27, 27': langer Hebelarm des dritten Hebels (aufgespaltener Teil)
- 28: langer Hebelarm des dritten Hebels (nicht aufgespaltener Teil)
- 29, 29': kurzer Hebelarm des dritten Hebels (aufgespalten)
- 30, 30': Abstützelemente für den dritten Hebel
- 31, 31': Abstützpunkte am Grundkörper für das Abstützelement 30 bzw. 30'
- 32, 32': Gelenkstellen zwischen Abstützelement 30 bzw. 30' und dem dritten Hebel
- 33, 33': Gelenkstellen zwischen Abstützelement 30 bzw. 30' und dem Grundkörper
- 34: Spule
- 35: Ausnehmung im oberen Lenker 12
- 36: Ausnehmung im unteren Lenker 11
- 37: Obere Abschlussfläche des vorkragenden Teils 3
- 37: Stufung
- 38, 38': Gelenkstellen zwischen dem Koppelelement 23 und dem kurzen Hebelarm des zweiten Hebels
- 39: Stufung des oberen Teils des vorkragenden Teils 3
- 40: Stufe am Lastaufnehmer 10 zur Befestigung der Waagschale
- 41: optischer Lagensensor
- 42: Verstärkung zwischen kurzem und langem Hebelarm des ersten Hebels
- 43: Gelenkstelle zwischen langem Hebelarm 22 des ersten Hebels und dem Koppelelement 23
- 44: zusätzlicher Hebel
- 45: seitlicher Vorsprung
- 46: Koppelelement
- 47: Vertiefung, Aufnahme für Kalibriergewicht 49
- 48: Durchbruch
- 49: Kalibriergewicht

- 50: rechter Teil des Lastaufnehmers
- 51: linker Teil des Lastaufnehmers (trägt die Waagschale)
- 52: Materialsteg zwischen rechtem und linkem Teil des Lastaufnehmers
- 53: Ausnehmung zwischen den Materialstegen 52
- 54: Gewindebohrungen zum Befestigen der Waagschale/Unterschale
- 55: zusätzlicher Hebel
- 56: seitlicher Vorsprung
- 57/58: Kniehebelsystem
- 59: Durchbruch
- 60: Kalibriergewicht
- 61: vertikale Verlängerung vom zweiten Übersetzungshebel 24/25
- 62, 62'/62": horizontaler Hebelarm, Teile vom Hebelarm
- 63, 63': Nut
- 64: Ausnehmung
- 65: Dünnstelle
- 66: Dünnstelle
- 67: Dünnstelle
- 68: Vertiefung
- 69: Vorsprung
- 70: Aufnahme für Kalibriergewicht
- 73, 73': Hubvorrichtung für Kalibriergewicht 49
- 79, 79': Enden des Kalibriergewichtes 49
- 80: Vorsprung von 10
- 81: Bohrung
- 82: Schraube
- 83: Durchbrechung
- 84: Joch
- 85: Stange
- 84, 85: angeschraubtes Aufnahmelager

## Patentansprüche

1. Aus einem Materialblock gebildeter Wägeaufnehmer für eine elektronische Waage nach dem Prinzip der elektromagnetischen Kraftkompensation, mit einem an einem feststehenden Grundkörper des Materialblocks durch Parallelführungselemente geführten beweglichen Lastaufnehmer und mehreren zwischen diesem, einem Spulenträger und dem Grundkörper wirkungsmäßig in Reihe angeordneten Kraftübertragungselementen,
**dadurch gekennzeichnet, dass** die aneinandergekoppelten einzelnen Kraftübertragungselemente (10,11,12,13 bis 34,38,38',42,43,44,44',46,55,55',57, 58,62) symmetrisch zu einer durch den Spulenträger (28) und den Lastaufnehmer (10) verlaufenden vertikalen Mittellängsebene angeordnet sind, dass die Kraftübertragungselemente mindestens einen Übersetzungshebel (24,25,25'; 27,27',28,29,29') beinhalten, der zumindest teilweise in zwei Teilhebel (25,25'; 27,27'; 29,29') aufgeteilt ist, dass die Kraftübertragungselemente mindestens ein Koppelelement beinhalten, das in zwei Teilkoppelelemente (26,26'; 38,38') aufgeteilt ist, dass die Teilhebel (25,25'; 27,27'; 29,29') und die Teilkoppelelemente (26,26'; 38,38') symmetrisch auf beiden Seiten eines vorkragenden Teils (3) des Grundkörpers (1) angeordnet sind, dass der vorkragende Teil (3) des Grundkörpers (1) für einen Teil der Kraftübertragungselemente (22) Lagerstellen (4,4') bildet und dass die Kraftübertragungselemente (10,11,12,13 bis 34,38,38',42,43,44,44',46,55,55',57, 58,62) einschließlich der Teilhebel (25,25'; 27,27'; 29,29') und der Teilkoppelelemente (26,26'; 38,38') monolithischer Bestandteil des Materialblockes sind.

2. Wägeaufnehmer nach Anspruch 1, **dadurch gekennzeichnet, dass** der vorkragende Teil (3) des Grundkörpers (1) in Bezug auf die vertikale Mittellängsebene in dieser mindestens eine Stufung (37,39) aufweist.

3. Wägeaufnehmer nach Anspruch 1, **dadurch gekennzeichnet, dass** vorkragende Teile (2,3) des Grundkörpers (1) in Bezug auf die vertikale Mittellängsebene sowohl in dieser als auch quer zu dieser mindesten je eine Stufung (37,39; 2',2",3') aufweisen.

4. Wägeaufnehmer nach einem der Ansprüche 1-3, **dadurch gekennzeichnet, dass** der mindestens eine Übersetzungshebel (24,25,25'; 27,27',28,29,29'), der zumindest teilweise in zwei Teilhebel aufgeteilt ist, zum einen Teil (24; 28) symmetrisch in der vertikalen Mittellängsebene und zum anderen Teil (25,25'; 27,27,29,29') beiderseits des vorkragenden Teiles (3) des Grundkörpers (1) angeordnet ist.

5. Wägeaufnehmer nach einem der Ansprüche 1-4, **dadurch gekennzeichnet, dass** die Kraftübertragungselemente (10,11,12,13 bis 34,38,38',43) drei Übersetzungshebel beinhalten, wobei ein erster Übersetzungshebel (21,22) ein nicht aufgeteilter Winkelhebel ist, ein zweiter Übersetzungshebel (24,25,25') ein gerader, zweiarmiger Hebel ist, der sich senkrecht erstreckt und bis auf einen kurzen Hebelarm (24) in zwei Teilhebel (25,25') gabelförmig aufgeteilt ist, und ein dritter Übersetzungshebel (27,27',28) ebenfalls ein Winkelhebel ist, der zum Teil gabelförmig aufgeteilt ist und zum Ende hin in Richtung der Spule (34) wieder zusammengeführt ist.

6. Wägeaufnehmer nach Anspruch 5, **dadurch gekennzeichnet, dass** die Breite des vorkragenden Teils (3) des Grundkörpers (1) geringer ist als die Breite der Lenker (11, 12) und dass die Breite der Teilhebel (25, 25', 27, 27') und der Teilkoppelelemente (26, 26', 38, 38') so gering ist, dass weder die Teilhebel noch die Teilkoppelelemente an irgendeiner Stelle seitlich über die Lenker hinausragen.

7. Wägeaufnehmer nach Anspruch 6, **dadurch gekennzeichnet, dass** die Breite des vorkragenden Teils (3) des Grundkörpers (1) etwa 40 % der Breite der Lenker (11, 12) beträgt und die Breite der Teilhebel (25, 25', 27, 27') und der Teilkoppelelemente (26, 26', 38, 38') je etwa 10...20 % der Breite der Lenker.

8. Wägeaufnehmer nach Anspruch 5, **dadurch gekennzeichnet, dass** der erste Übersetzungshebel (21/22) ein nichtaufgeteilter Winkelhebel ist, dass der zweite Übersetzungshebel (24/25/25') ein gerader, zweiarmiger Hebel ist, der sich senkrecht erstreckt und bis auf einen kurzen Hebelarm (24) in zwei Teilhebel (25,25') aufgespalten ist, und dass der dritte Übersetzungshebel (29/29'/27/27'/28) ein horizontal und vertikal abgekröpfter Winkelhebel ist, der zum Teil gabelförmig aufgespaltet ist und zum Ende hin in Richtung der Spule (34) wieder zusammengeführt ist und an seinem Endbereich ein integriertes Aufnahmelager für die Spule (34) und einen optischen Lagensensor (41) aufweist.

9. Wägeaufnehmer nach einem der Ansprüche 1 - 8, **dadurch gekennzeichnet, dass** der Grundkörper (1) außerhalb der Lenker (11, 12) ein vertikales Loch (8) für den Permanentmagneten aufweist, wobei um das Loch (8) herum überall noch mindestens ein fünf mm breiter Materialsteg stehen bleibt.

10. Wägeaufnehmer nach einem der Ansprüche 5 - 9, **dadurch gekennzeichnet, dass** der Grundkörper (1) ein waagerechtes, durchgehendes Loch (9) aufweist, in das der lange Hebelarm (28) des dritten Hebels hineinragt, und dass das Loch (9) nach oben, unten und zu beiden Seiten hin von mindestens 5 mm Material umschlossen ist.

11. Wägeaufnehmer nach einem der Ansprüche 1 - 10, **dadurch gekennzeichnet, dass** die Lenker (11, 12) über ihre ganze Länge dieselbe Breite aufweisen und dass die Lenker (11, 12) eine mittige Ausnehmung (35, 36) aufweisen, die auf jeder Seite mindestens 5 mm Material stehen lässt.

12. Wägeaufnehmer nach einem der Ansprüche 1 - 11, **dadurch gekennzeichnet, dass** der Lastaufnehmer (10) auf seiner Oberseite und auf seiner Unterseite je eine horizontale Stufe (40) aufweist, an der die Verbindungselemente zur Schale, bzw. zur Unterschale befestigt sind, und dass die Stufe (40) sich genau auf der Höhe der Dünnstellen der Gelenkstellen (15 bzw. 14) zwischen Lastaufnehmer (10) und Lenker (12 bzw. 11) befinden.

13. Wägeaufnehmer nach Anspruch 12, **dadurch gekennzeichnet, dass** die Stufe (40) eine geringere Breite aufweist als die Lenker (11,12).

14. Wägeaufnehmer nach einem der Ansprüche 1 - 11, **dadurch gekennzeichnet, dass** der Lastaufnehmer (50/51) eine sich im Wesentlichen in vertikaler Richtung erstreckende Ausnehmung (53) aufweist, die den Lastaufnehmer (50/51) in zwei Teile unterteilt und die an ihrer Oberseite und an ihrer Unterseite nur je einen dünnen horizontalen Materialsteg (52) als Verbindung zwischen den beiden Teilen des Lastaufnehmers (50/51) belässt, dass die Lenker (11, 12) an dem einen Teil (50) des Lastaufnehmers angreifen, während die Schale, bzw. Unterschale am anderen Teil (51) des Lastaufnehmers befestigt sind und dass sich die horizontalen Materialstege (52) genau auf der Höhe der Dünnstellen der Gelenkstellen (14, 15) zwischen Lastaufnehmer (50/51) und Lenker (11, 12) befinden.

15. Wägeaufnehmer nach Anspruch 1, **dadurch gekennzeichnet, dass** der Lastaufnehmer (10) durch einen oberen Lenker (12) und einen unteren Lenker (11) mit dem Grundkörper (1) verbunden ist, dass die Kraftübertragungselemente mindestens drei Übersetzungshebel (21,22;24,25,25';29,29',27,27'28) zur Kraftuntersetzung und Koppelelemente (18,18' 23) zwischen den Übersetzungshebeln (21,22; 24,25,25';29,29',27,27'28) und zwischen dem Lastaufnehmer (10) und dem ersten Übersetzungshebel (21, 22) umfassen, dass der Grundkörper (1) sich in Richtung zum Lastaufnehmer (10) vorkragend in den Raum zwischen den beiden Lenkern (11,12) hinein erstreckt und nahe an seinem vorkragenden Ende Lagerstellen (4,4') für den ersten Übersetzungshebel (21,22) bildet und dass am längeren Hebelarm (28) des letzten Übersetzungshebels (28,29,29') eine Spule (34) befestigt ist, die sich im magnetischen Feld eines gehäusefesten Permanentmagneten befindet.

16. Wägeaufnehmer nach Anspruch 1, **dadurch gekennzeichnet, dass** mindestens ein Kraftübertragungselement (44, 55, 61,62) für die Auflage eines Kalibriergewichtes (49, 60) monolithischer Bestandteil des Materialblockes ist.

17. Wägeaufnehmer nach Anspruch 16, **dadurch gekennzeichnet, dass** das Kraftübertragungselement ein Hebel (44, 55, 61,62) ist und eine Aufnahme (47, 68) für die direkte Auflage eines Kalibriergewichtes (49, 60) aufweist.

18. Wägeaufnehmer nach Anspruch 16, **dadurch gekennzeichnet, dass** der Hebel in zwei Hebel (44/44', 55, 62'/62'') aufgespalten ist.

19. Wägeaufnehmer nach einem der Ansprüche 16 oder 17, **dadurch gekennzeichnet, dass** der die Aufnahme (47, 68) für das Kalibriergewicht 849, 60) aufweisende Hebel (44, 55, 62) an einem der Übersetzungshebel (21/22, 24/25, 27/28/29) angreift.

20. Wägeaufnehmer nach Anspruch 16, **dadurch gekennzeichnet, dass** das Kalibriergewicht (49, 60) zylinderförmig ausgebildet ist, wobei die Länge längs der Zylinderachse größer ist als die Breite des Materialblockes.

21. Wägeaufnehmer nach Anspruch 1 und 15, **dadurch gekennzeichnet, dass** eines der Kraftübertragungselemente (21/22, 24/25, 27/28/29) einen zusätzlichen Hebelarm (61, 62) für die Auflage eines Kalibriergewichtes (60) aufweist und dass dieser zusätzliche Hebelarm (61, 62) ebenfalls monolithischer Bestandteil des Materialblockes ist, oder dass dieser zusätzliche Hebelarm ein angeschraubter Hebelarm (84, 85) für die direkte Auflage eines Kalibriergewichtes (60) ist.

22. Wägeaufnehmer nach Anspruch 15, **dadurch gekennzeichnet, dass** am zweiten Übersetzungshebel (24/25) außerhalb des Ankoppelpunktes (38) des Koppelelementes (23) ein horizontaler, den Lastaufnehmer (10) durchsetzender Hebelarm (62,62',62") angeordnet ist und dass das Kalibriergewicht (60) auf diesen Hebelarm (62, 62',62''; 84, 85) direkt auflegbar ist.

23. Wägeaufnehmer nach Anspruch 22, **dadurch gekennzeichnet, dass** der Hebelarm (62) den Lastaufnehmer (10) mittig in der Symmetrieebene des Wägeaufnehmers durchsetzt.

24. Wägeaufnehmer nach Anspruch 22, **dadurch gekennzeichnet, dass** der Hebelarm (62;84, 85) gabelförmig aufgespalten ist und den Lastaufnehmer (10) in horizontalen seitlichen Nuten (63, 63') umgreift oder in seitlichen Durchbrechungen (83) durchsetzt.

25. Wägeaufnehmer nach Anspruch 16, **dadurch gekennzeichnet, dass** das Kalibriergewicht (49) im Bereich zwischen Lastaufnehmer (10) und dem gehäusefesten Grundkörper (1) angeordnet ist, diesen Bereich in einer Durchbrechung (48, 59) quer durchsetzt und durch eine am gehäusefesten Grundkörper (1) angeordnete Hubvorrichtung (73, 73') wahlweise in eine mit Kraftübertragungselementen (44, 44', 55, 55') in Wirkverbindung tretende Kalibrierposition oder in eine das Kalibriergewicht (49) deaktivierende Position bringbar ist.

26. Wägeaufnehmer nach Anspruch 25, **dadurch gekennzeichnet, dass** das Kalibriergewicht (49) in der deaktivierten Position in der Durchbrechung (48, 59) des gehäusefesten Grundkörpers (1) mit der Hubvorrichtung (73, 73') festlegbar ist.

## Claims

1. Weighing sensor, which is formed from a block of material, for an electronic weighing machine according to the principle of electromagnetic force compensation, with a movable load pick-up, which is guided at a stationary base body of a block of material by parallel guide elements, and several force transmission elements arranged between these and in terms of effect in series with a coil carrier and the base body, **characterised in that** the intercoupled individual force transmission elements (10, 11, 12, 13 to 34, 38, 38', 42, 43, 44, 44', 46, 55, 55', 57, 58, 62) are arranged symmetrically with respect to a vertical centre longitudinal plane extending through the coil carrier (28) and the load pick-up (10), that the force transmission elements include at least one translation lever (24, 25, 25'; 27, 27', 28, 29, 29') which is divided at least in part into two part levers (25, 25'; 27, 27'; 29, 29'), that the force transmission levers include at least one coupling element, which is divided into two part coupling elements (26, 26'; 38, 38'), that the part levers (25, 25'; 27, 27', 29, 29') and the part coupling elements (26, 26'; 38, 38') are arranged symmetrically on either side of a projecting part (3) of the base body (1), that the projecting part (3) of the base body (1) forms bearing points (4, 4') for a part of the force transmission elements (22) and that the force transmission elements (10, 11, 12, 13 to 34, 38, 38', 42, 43, 44, 44', 46, 55, 55', 57, 58, 62) inclusive of the part levers (25, 25'; 27, 27', 29, 29') and the part coupling elements (26, 26'; 38, 38') are a monolithic component of the block of material.

2. Weighing sensor according to claim 1, **characterised in that** the projecting part (3) of the base body (1) has with respect to the vertical centre longitudinal plane at least one step (37, 39) in this.

3. Weighing sensor according to claim 1, **characterised in that** projecting parts (2, 3) of the base body (1) have with respect to the vertical centre longitudinal plane at least one respective step (37, 39; 2', 2", 3') not only in this, but also transversely thereto.

4. Weighing sensor according to one of claims 1 to 3, **characterised in that** the at least one translation lever (24, 25, 25'; 27, 27', 28, 29, 29'), which is divided at least in part into two part levers, is arranged for one part (24; 28) symmetrically in the vertical centre longitudinal plane and for the other part (25, 25'; 27, 27', 29, 29') on other side of the projecting part (3) of the base body (1).

5. Weighing sensor according to one of claims 1 to 4, **characterised in that** the force transmission elements (10, 11, 12, 13 to 34, 38, 38', 43) include three translation levers, wherein a first translation lever (21, 22) is an undivided angle lever, a second translation lever (24, 25, 25') is a straight, double-arm lever, which extends vertically and up to a short lever arm (24) is divided in fork shape into two part levers (25, 25'), and a third translation lever (27, 27', 28) is similarly an angle lever, which in part is divided in fork shape and is led together again towards the end in the direction of the coil (34).

6. Weighing sensor according to claim 5, **characterised in that** the width of the projecting part (3) of the base body (1) is smaller than the width of the guides (11, 12) and that the width of the part levers (25, 25', 27, 27') and of the part coupling elements (26, 26', 38, 38') is so small that neither the part levers nor the part coupling elements project at any point laterally beyond the guides.

7. Weighing sensor according to claim 6, **characterised in that** the width of the projecting part (3) of the base body (1) is approximately 40% of the width of the guides (11, 12) and the width of the part levers (25, 25', 27, 27') and the part coupling elements (26,26', 38, 38') respectively is approximately 10 to 20% of the width of the guides.

8. Weighing sensor according to claim 5, **characterised in that** the first translation lever (21/22) is an undivided angle lever, that the second translation lever (24/25/25') is a straight, double-arm lever, which extends vertically and up to a short lever arm (24) is divided into two part levers (25, 25'), and that the third translation lever (29/29'/27/27'/28) is a horizontally and vertically cranked angle lever, which in part is divided in fork shape and is led together towards the end in the direction of the coil (34) and has at its end region an integrated receiving mount for the coil (34) and an optical position sensor (41).

9. Weighing sensor according to one of claims 1 to 8, **characterised in that** the base body (1) has outside the guides (11, 12) a vertical hole (8) for the permanent magnets, wherein a material web which overall is at least still of five mm width remains around the hole (8).

10. Weighing sensor according to one of claims 5 to 9, **characterised in that** the base body (1) has a horizontal, continuous hole (9), into which the long lever arm (28) of the third lever penetrates, and that the hole (9) is surrounded at the top, bottom and both sides by at least 5 mm of material.

11. Weighing sensor according to one of claims 1 to 10, **characterised in that** the guides (11, 12) have the same width over their entire length and that the guides (11, 12) have a central recess (35, 36), which allows at least 5 mm of material to remain on each side.

12. Weighing sensor according to one of claims 1 to 11, **characterised in that** the load pick-up (10) has on each of its upper side and its lower side a respective horizontal step (40), to which the connecting elements for the pan or the lower pan are fastened, and that the step (40) is disposed exactly at the height of the thin points of the joint locations (15 and 14) between load pick-up (10) and guides (10 or 11).

13. Weighing sensor according to claim 12, **characterised in that** the step (40) has a smaller width than the guides (11, 12).

14. Weighing sensor according to one of claims 1 to 11, **characterised in that** the load pick-up (50/51) has a recess (63) which extends substantially in vertical direction and subdivides the load pick-up (50/51 into two parts and which leaves at its upper side and at its lower side in each instance only a thin horizontal material web (52) as connection between the two parts of the load pick-up (50/51), that the guides (11, 12) engage at one part (50) of the load pick-up, whilst the pan or the lower pan is fastened to the other part (51) of the load pick-up, and that the horizontal material webs (52) are disposed exactly at the height of the thin points of the joint locations (14, 15) between load pick-up (50/51) and guides (11, 12).

15. Weighing sensor according to claim 1, **characterised in that** the load pick-up (10) is connected by an upper guide (12) and a lower guide (11) with the base body (1), that the force transmission elements comprise at least three translation levers (21, 22; 24, 25, 25'; 29, 29', 27, 27', 28) for force step down and coupling elements (18, 18', 23) between the translation levers (21, 22; 24, 25, 25', 29, 29', 27, 27', 28) and between the load pick-up (10) and the first translation lever (21, 22), that the base body (1) extends into the space between the two guides (11, 12) to project in direction towards the load pick-up (10) and in proximity of its projecting end forms bearing points (4, 4') for the first translation lever (21, 22) and that a coil (34) which is disposed in the magnetic field of a permanent magnet fixed relative to the housing is fastened to the longer lever arm (28) of the last translation lever (28, 29, 29').

16. Weighing sensor according to claim 1, **characterised in that** at least one force transmission element (44, 55, 61, 62) for the support of a calibrating weight (49, 60) is a monolithic component of the block of material.

17. Weighing sensor according to claim 16, **characterised in that** the force transmission element is a lever (44, 55, 61, 62) and has a mount (47, 68) for direct support of a calibrating weight (49, 60).

18. Weighing sensor according to claim 16, **characterised in that** the lever is divided into two levers (44/44', 55, 62'/62").

19. Weighing sensor according to one of claims 16 and 17, **characterised in that** the lever (44, 55, 62) having the mount (47, 68) for the calibrating weight (49, 60) engages at one of the translation levers (21/22, 24/25, 27/28/29).

20. Weighing sensor according to claim 16, **characterised in that** the calibrating weight (49, 60) is of cylindrical construction, wherein the length along the cylinder axis is greater than the width of the block of material.

21. Weighing sensor according to claim 1 and 15, **characterised in that** one of the force transmission elements (21/22, 24/25, 27/28/29) has an additional lever arm (61, 62) for support of a calibrating weight (60) and that this additional lever arm (61, 62) is similarly a monolithic component of the block of material or that this additional lever arm is a screw-connected lever arm (84, 85) for direct support of a calibrating weight (60).

22. Weighing sensor according to claim 15, **characterised in that** a horizontal lever arm (62, 62', 62") passing through the load pick-up (10) is arranged at the second translation lever (24/25) outside the coupling point (38) of the coupling element (23) and that the calibrating weight (60) can be directly placed on this lever arm (62, 62', 62"; 84, 85),

23. Weighing sensor according to claim 22, **characterised in that** the lever arm (62) passes through the load pick-up (10) centrally in the plane of symmetry of the weighing sensor.

24. Weighing sensor according to claim 22, **characterised in that** the lever arm (62; 84, 85) is divided in fork shape and engages around the load pick-up (10) in horizontal lateral grooves (63, 63') or passes through the load pick-up in lateral passages (83).

25. Weighing sensor according to claim 16, **characterised in that** the calibrating weight (49) is arranged in the region between load pick-up (10) and the base body (1) fixed relative to the housing, transversely passes through this region in a passage (48, 59) and can be selectably brought by a lifting device (73, 73'), which is arranged at the base body (1) fixed relative to the housing, into a calibrating position coming into operative connection with force transmission elements (44, 44', 55, 55') or into a position deactivating the calibrating weight (49).

26. Weighing sensor according to claim 25, **characterised in that** the calibrating weight (49) in the deactivated position can be fixed in the passage (48, 59) of the base body (1), which is fixed relative to the housing, by the lifting device (73, 73').

## Revendications

1. Capteur de poids formé dans un bloc de matériau, destiné à une balance électronique fonctionnant selon le principe de la compensation de la force électromagnétique, comportant un récepteur de charge guidé de manière mobile par des éléments de guidage parallèles sur un corps de base fixe du bloc de matériau, et plusieurs éléments de transmission de la force agencés activement en série entre ce dernier, un porte-bobine et le corps de base,
**caractérisé en ce que** les différents éléments de transmission de la force couplés les uns aux autres (10,11,12,13 à 34,38,38',42,43,44,44',46,55,55',57,58,62) sont agencés symétriquement par rapport à un plan longitudinal central vertical passant par le porte-bobine (28) et le récepteur de charge (10), **en ce que** les éléments de transmission de la force comprennent au moins un levier de transmission (24,25,25' ; 27,27',28,29,29') qui est au moins divisé en deux leviers partiels (25, 25' ; 27, 27' ; 29, 29'), **en ce que** les éléments de transmission de la force comprennent au moins un élément de couplage, qui est divisé au moins (partiellement) en deux éléments de couplage partiels (26,26' ; 38,38'), **en ce que** les leviers partiels (25,25' ; 27,27' ; 29,29') et les éléments de couplage partiels (26,26' ; 38,38') sont agencés symétriquement de chaque côté d'une partie en saillie (3) du corps de base (1), **en ce que** la partie en saillie (3) du corps de base (1) forme des points de montage (4,4') pour une partie des éléments de transmission de la force (22), et **en ce que** les éléments de transmission de la force (10,11,12,13 à 34,38,38',42,43,44,44',46,55,55',57,58,62) incluant les leviers partiels (25, 25' ; 27, 27' ; 29, 29') et les éléments de couplage partiels (26, 26' ; 38,38') font partie intégrante monolithique du bloc de matériau.

2. Capteur de poids selon la revendication 1, **caractérisé en ce que** la partie en saillie (3) du corps de base (1) présente par rapport au plan longitudinal central vertical au moins une graduation (37,39) dans ce dernier.

3. Capteur de poids selon la revendication 1, **caractérisé en ce que** les parties en saillie (2,3) du corps de base (1) présentent chacune par rapport au plan longitudinal central vertical au moins une graduation (37,39 ; 2',2",3') à la fois dans ce plan et transversalement à ce plan.

4. Capteur de poids selon une des revendications 1 à 3, **caractérisé en ce qu'**au moins un levier de transmission (24,25,25' ; 27,27',28,29,29'), qui est au moins partiellement divisé en deux leviers partiels, est agencé pour une partie (24 ; 28) symétriquement dans le plan longitudinal central vertical et pour l'autre partie (25,25',27,27',29,29') de chaque côté de la partie en saillie (3) du corps de base (1).

5. Capteur de poids selon une des revendications 1 à 4, **caractérisé en ce que** les éléments de transmission de la force (10,11,12,13 à 34,38,38',43) comprennent trois leviers de transmission, un premier levier de transmission (21,22) étant un levier angulaire non divisé, un deuxième levier de transmission (24,25,25') étant un levier droit à deux bras qui s'étend verticalement et est divisé jusqu'à un bras de levier court (24) en deux leviers partiels (25,25') formant une fourche, et un troisième levier de transmission (27,27',28) étant également un levier angulaire qui est en partie divisé pour former une fourche et est à nouveau réuni vers son extrémité en direction de la bobine (34).

6. Capteur de charge selon la revendication 5, **caractérisé en ce que** la largeur de la partie en saillie (3) du corps de base (1) est inférieure à la largeur des guides (11,12), et **en ce que** la largeur des leviers partiels (25,25',27,27') et des éléments de couplage partiels (26,26',38,38') est suffisamment petite pour que ni les leviers partiels, ni les éléments de couplage partiels ne dépassent en aucun point latéralement des guides.

7. Capteur de charge selon la revendication 6, **caractérisé en ce que** la largeur de la partie en saillie (3) du corps de base (1) s'élève à environ 40 % de la largeur des guides (11,12), et la largeur des leviers partiels (25,25', 27,27') et des éléments de couplage partiels (26,26',38,38') à environ 10 à 20 % de la largeur des guides.

8. Capteur de poids selon la revendication 5, **caractérisé en ce que** le premier levier de transmission (21,22) est un levier angulaire non divisé, **en ce que** le deuxième levier de transmission (24,25,25') est un levier droit à deux bras qui s'étend verticalement et est divisé jusqu'à un bras de levier court (24) en deux leviers partiels (25,35') et **en ce que** le troisième levier de transmission (29/29'/27/27'/28) est un levier angulaire coudé verticalement et horizontalement qui est pour une partie divisé pour former une fourche et à nouveau réuni vers son extrémité en direction de la bobine (34), et qui présente dans sa partie d'extrémité un logement intégré pour la bobine (34) et un capteur optique de position (41).

9. Capteur de poids selon une des revendications 1 à 8, **caractérisé en ce que** le corps de base (1) présente, à l'extérieur des guides (11,12), un orifice vertical (8) pour l'aimant permanent, une bride de matériau d'au moins 5 mm de largeur restant tout autour de l'orifice (8).

10. Capteur de poids selon une des revendications 5 à 9, **caractérisé en ce que** le corps de base (1) présente un orifice traversant (9) horizontal dans lequel avance le bras de levier long (28) du troisième levier, et **en ce que** l'orifice (9) est entouré vers le haut, vers le bas et des deux côtés par au moins 5 mm de matériau.

11. Capteur de poids selon une des revendications 1 à 10, **caractérisé en ce que** les guides (11,12) présentent la même largeur sur toute leur longueur, et **en ce que** les guides (11,12) présentent un évidement central (35,36) qui laisse de chaque côté au moins 5 mm de matériau.

12. Capteur de poids selon une des revendications 1 à 11, **caractérisé en ce que** le récepteur de charge (10) présente sur chacune de sa face supérieure et de sa face inférieure un épaulement horizontal (40) auquel sont fixés les éléments de liaison pour le plateau et/ou le sous-plateau, et **en ce que** l'épaulement (40) se trouve exactement à la hauteur des points de faible épaisseur des points d'articulation (14 ou 15) entre le récepteur de charge (10) et les guides (12 ou 11).

13. Capteur de poids selon la revendication 12, **caractérisé en ce que** l'épaulement (40) présente une largeur inférieure à celle des guides (11,12).

14. Capteur de poids selon une des revendications 1 à 11, **caractérisé en ce que** le récepteur de charge (50/51) présente un évidement (53) s'étendant sensiblement dans le sens vertical, qui divise le récepteur de charge (50/51) en deux parties et ne garde sur chacune de sa face supérieure et de sa face inférieure qu'une bride de matériau (52) horizontale de faible épaisseur en tant que liaison entre les deux parties du récepteur de charge (50/51), **en ce que** les guides (11,12) s'engrènent avec une partie (50) du récepteur de charge, tandis que le plateau et/ou le sous-plateau est fixé à l'autre partie (51) du récepteur de charge, et **en ce que** la bride de matériau (52) horizontale se trouve exactement à la hauteur des points de faible épaisseur des points d'articulation (14,15) entre le récepteur de charge (50/51) et les guides (11,12).

15. Capteur de poids selon la revendication 1, **caractérisé en ce que** le récepteur de charge (10) est relié au corps de base (1) par un guide supérieur (12) et un guide inférieur (11), **en ce que** les éléments de transmission de la force comprennent au moins trois leviers de transmission (21,22 ;24,25,25' ; 29,29'27,27'28) pour la transmission de la force et des éléments de couplage (18,18'23) entre les leviers de transmission (21,22 ;24,25,25' ; 29,29'27,27'28) et entre le récepteur de charge (10) et le premier levier de transmission (21,22), **en ce que** le corps de base (1) s'étend en saillie en direction du récepteur de charge (10) dans l'espace entre les deux guides (11,12) et forme à proximité de son extrémité en saillie les points de montage (4,4') pour le premier levier de transmission (21,22), et **en ce que** sur le bras de levier long (28) du dernier levier de transmission (28,29,29') est fixée une bobine (34) qui se trouve dans le champ magnétique d'un aimant permanent fixé au boîtier.

16. Capteur de poids selon la revendication 1, **caractérisé en ce qu'**au moins un élément de transmission de la force (44,55,61,62) servant d'appui à un poids d'étalonnage (49, 60) fait partie intégrante monolithique du bloc de matériau.

17. Capteur de poids selon la revendication 16, **caractérisé en ce que** l'élément de transmission de la force est un levier (44,55,61,62) et présente un logement (47,68) pour l'appui direct d'un poids d'étalonnage (49,60).

18. Capteur de poids selon la revendication 16, **caractérisé en ce que** le levier est divisé en deux leviers (44/44',55,62'/62").

19. Capteur de poids selon une des revendications 16 ou 17, **caractérisé en ce que** le levier (44,55,62) présentant le logement (47,68) pour le poids d'étalonnage (49,60) s'engrène avec un des leviers de transmission (21/22,24/25,27/28/29).

20. Capteur de poids selon la revendication 16, **caractérisé en ce que** le poids d'étalonnage (49,60) est réalisé pour être cylindrique, la longueur de l'axe du cylindre étant supérieure à la largeur du bloc de matériau.

21. Capteur de poids selon les revendications 1 et 15, **caractérisé en ce qu'**un des éléments de transmission de la force (21/22,24/25,27/28/29) présente un bras de levier supplémentaire (61,62) pour servir d'appui à un poids d'étalonnage (60) et **en ce que** ce bras de levier supplémentaire (61,62) fait également partie intégrante monolithique du bloc de matériau, ou **en ce que** ce bras de levier supplémentaire est un bas vissé (84,85) pour servir d'appui direct à un poids d'étalonnage (60).

22. Capteur de poids selon la revendication 15, **caractérisé en ce qu'**un levier horizontal (62,62',62") traversant le récepteur de charge (10) est agencé au niveau du deuxième levier de transmission (24/25) à l'extérieur du point de couplage (38) de l'élément de couplage (23), et **en ce que** le poids d'étalonnage (60) peut être déposé directement sur ce bras de levier (62,62',62'' ; 84,85).

23. Capteur de poids selon la revendication 22, **caractérisé en ce que** le bras de levier (62) du récepteur de charge (10) traverse centralement le plan de symétrie du capteur de poids.

24. Capteur de poids selon la revendication 22, **caractérisé en ce que** le bras de levier (62 ; 84,85) est divisé pour former une fourche et entoure le récepteur de charge (10) dans des rainures latérales horizontales (63,63') ou traverse les ouvertures traversantes latérales (83).

25. Capteur de poids selon la revendication 16, **caractérisé en ce que** le poids d'étalonnage (49) est agencé dans une zone entre le récepteur de charge (10) et le corps de base (1) fixé au boîtier, traverse cette zone transversalement dans une ouverture traversante (48,59), et peut être mis selon les besoins dans une position d'étalonnage créant une liaison active avec les éléments de transmission de la force (44,44',45,45') ou dans une position désactivant le poids d'étalonnage (49), par un dispositif de levage (73,73') agencé au niveau du corps de base (1) fixé au boîtier.

26. Capteur de poids selon la revendication 25, **caractérisé en ce que** le poids d'étalonnage (49) peut être mis en position désactivée par le dispositif de levage (73,73') dans l'ouverture traversante (48,59) du corps de base (1) fixé au boîtier.
